# EUROPÄISCHE PATENTSCHRIFT

(11) **EP 0 618 035 B1**
(45) Veröffentlichungstag und Bekanntmachung des Hinweises auf die Patenterteilung: **15.12.1999**
(21) Anmeldenummer: 94103413.4
(22) Anmeldetag: 07.03.1994
(51) Int. Cl.: B23K 1/012

(54) **Löt-/Entlötvorrichtung, insbesondere für integrierte Schaltungen**
Solder/desolder device for integrated circuits
Dispositif de soudage/désoudage pour circuits intégrés

(30) Priorität: 29.03.1993 DE 9304784 U
(43) Veröffentlichungstag der Anmeldung: 05.10.1994
(73) Patentinhaber: COOPER INDUSTRIES, INC., Houston Texas 77210 (US)
(72) Erfinder: Kurpiela, Gerhard, D-74336 Brackenheim (DE)
(74) Vertreter: Hilgers, Hans Hubert

(56) Entgegenhaltungen:
- WO-A-91/07247
- DE-A- 3 829 596
- DE-U- 9 304 784
- US-A- 4 564 135
- US-A- 4 787 548
- PATENT ABSTRACTS OF JAPAN vol. 13, no. 100 (M-805) 9. März 1989 & JP-A-63 290 681 (HIROSHI AKASHI) 28. November 1988

## Beschreibung

Die Erfindung bezieht sich auf eine Heizdüse als Bestandteil einer Löt-/Entlötvorrichtung, insbesondere für integrierte Schaltungen.

Es ist eine Anzah von Löt-/Entlötvorrichtungen, insbesondere für integrierte Schaltungen bekannt, die entweder auf Leiterbahnen auf der von der integrierten Schaltung abgewandten Seiten einer Leiterplatte oder direkt auf die Anschlüsse integrierter Schaltungen einwirken, um das für den Anschluß der integrierten Schaltung verwendete Lot zum Schmelzen zu bringen, damit die integrierte Schaltung auf der Leiterplatte befestigt oder von der Leiterplatte entfernt werden kann. Die zur Erwärmung des Lots notwendige Hitze wird dabei entweder durch direkte Wärmeleitung, nämlich durch Kontakt mit einem Heizstempel, oder mittels Heißluft aufgebracht.

Gerade zum Löten/Entlöten von größeren SMD-Bauelementen eignet sich insbesondere eine Erwärmung mittels Heißluft, da auf diese Weise alle Lötstellen im wesentlichen gleichzeitig erwärmt werden können oder im Falle des Auflötens verlötet werden können. Die beim Heißluftverfahren verwendeten Düsen sind zum Zwecke des Entlötens teilweise mit einem Saugrüssel versehen, mit welchem das entlötete Bauelement an der Leiterplatte abgehoben werden kann.

In der US-A-4564135 wird eine Heizdüse offenbart, bei der in einem haubenförmigen Teil mit seitlichen Wänden ein pyramidenförmiges Bauteil aus Messing angeordnet ist. Zwischen den seitlichen Wänden und dem Bauteil sind Fluidkanäle gebildet, entlang denen Heißgas durch eine Spitze des pyramidenförmigen Bauteils und Flügel an dieser Spitze abgelenkt wird. Das Heißgas bewegt sich in den Kanälen im wesentlichen parallel zu den Seitenwänden, bzw. den gegenüberliegenden Pyramidenaußenflächen.

Zwar ist bezüglich des pyramidenförmigen Bauteils sowie der Flügel und auch anderer Bauteile der in der US-A-4564135 beschriebenen Heizdüse ausgesagt, daß diese aus Messing hergestellt sind. Dies bedeutet allerdings nicht, daß über eine Grundfläche der Pyramide das mit elektronischen Bauteilen bestückte Substrat direkt durch die Pyramide erwärmt werden soll oder wird.

Statt dessen wird explizit das Strömen des Heißgases entlang der Seitenflächen des Bauteils beschrieben. Es ist nichts über eine Wärmeübertragung durch das pyramidenförmige Bauteil offenbart. Statt dessen wird ausdrücklich angegeben, daß der Körper des Substrats vor einer Erwärmung geschützt werden soll und daß Heißgas an die Lötstellen direkt herangeführt wird.

In der DE-A-3829596 wird eine Heizdüse mit einer Schutzplatte beschrieben, wobei durch die Schutzplatte Bauteile vor einem zugeführten Heißgasstrom geschützt werden Dem Heißgasstrom wird dabei zusätzlich Flußmittel in Form von kleinen Tröpfchen oberhalb der Schutzplatte zugeführt. Eine Beaufschlagung der Schutzplatte mit Heißgas ist nicht beabsichtigt, da das Flußmittel mit dem heißen Gasstrom entsprechenden Lötstellen zugeführt werden soll. Das Heißgas wird dabei durch Schlitze in der Heizdüse den Lötstellen zugeführt, so daß nach DE-A-3829596 sowohl der Heißgasstrom als auch das mitgeführte Flußmittel an der Schutzplatte durch schlitzartige Öffnungen vorbeigeführt werden sollen.

Im Hinblick auf US-A-4564135 liegt dem Anmeldungsgegenstand die Aufgabe zugrunde, ein Bauteil gleichmäßig und schnell in einfacher und kostengünstiger Weise ausreichend zum Ver- und Entlöten zu erwärmen.

Diese Aufgabe wird durch die Merkmale des Anspruchs 1 gelöst. Erfindungsgemäß wird der Düsenboden als zusätzliches Heizelement eingesetzt, so daß beispielsweise auf eine weitere Infrarotheizquelle auf der der Heizdüse gegenüberliegenden Seite einer Leiterplatte verzichtet werden kann. Durch den erwärmten Düsenboden wird insgesamt für eine gleichmäßige Erwärmung des Bauteils gesorgt und die Heizdüse kann beispielsweise so geregelt werden, daß der Düsenboden durch Beaufschlagen mit einer gewissen Heißgasmenge immer auf einer bestimmten Temperatur gehalten wird. Beim Löten oder Entlöten wird diese Temperatur gezielt in das Bauelement eingebracht. Dadurch reduziert sich die Energie, die der Lötstelle und damit der empfindlichen Leiterplatte zugeführt werden muß. Bei der erfindungsgemäßen Heizdüse oder einer diese enthaltene Löt-/Entlötvorrichtung ist daher sowohl ein direktes Aufheizen des Bauelements durch Kontakt mit dem heißen Düsenboden möglich, als auch ein auf die Anschlußdüse der Bauelemente gerichteter Heizstrom gewährleistet.

Demgegenüber ist der US-A-4564135 nur entnehmbar, daß eine direkte Beaufschlagung der Bauteile, bzw. des Substrats in der Leiterplatte mit Heißgas vermieden werden soll und durch bestimmte Einrichtungen das Heißgas zu den Lötstellen gelenkt werden soll. Auch über eine indirekte Erwärmung über das pyramidenförmige Bauteil ist nichts entnehmbar, selbst wenn diese Pyramide aus Messing hergestellt ist.

In diesem Zusammenhang ist zu beachten, daß beim Anmeldungsgegenstand der plattenartige Düsenboden aus einem gut wärmeleitfähigen Material hergestellt ist und durch diesen Düsenboden eine Erwärmung der Lötstelle zusätzlich zum Heißgas erfolgen soll. Um eine in diesem Zusammenhang ausreichende Erwärmung des Düsenbodens zu ermöglichen, ist dieser plattenförmig ausgebildet, damit das Heißgas vorzugsweise senkrecht auf die Oberseite des Düsenbodens auftritt und entlang der Oberfläche in Richtung von schlitzartigen Ausnehmungen abströmt. Im Gegensatz dazu strömt das Heizgas nach US-A-4564135 insbesondere im unteren Teil des pyramidenförmigen Bauteils parallel zu dessen Außenseiten, so daß sich allein aus diesem Grunde bereits eine erheblich geringere Wärmeübertragung vom Heißgas auf das Bauteil ergibt im Vergleich zum senkrechten Auftreffen des Heizgases auf das plattenförmige Bauteil gemäß Anmeldungsgegenstand.

Bei der US-A-4564135 ist die Pyramidenform speziell zum Ablenken des Heißgases ausgewählt worden, wobei nichts über eine Wärmeübertragung durch dieses pyramidenförmige Bauteil entnehmbar ist. Ganz im Gegenteil ist selbst bei einem solchen Bauteil aus Messing zu beachten, daß die Wärmeübertragung, wie bereits oben ausgeführt, durch das Strömen das Heißgases parallel zu Seitenflächen der Pyramide relativ schlecht ist und daß die Wärmeübertragung durch die unterschiedliche vertikale Dicke des pyramidenförmigen Bauteils oberhalb der elektronischen Schaltung ungleichmäßig erfolgen würde, wobei insbesondere im Kantenbereich der Pyramide direkt oberhalb der elektronischen Schaltung wohl eine zu starke Erwärmung auftreten würde, die statt dessen elektronische Bauteile oder andere Lötstellen schädigen könnten.

Erfindungsgemäß ist vorteilhafterweise der Düsenboden im Verhältnis zur Austrittsöffnung der Düse derart dimensioniert, daß in der Nähe des inneren Umfangsrandes an der Austrittsöffnung schlitzartige Öffnungen zum Austritt der heißen Gase gebildet sind. Je nach Verwendungszweck kann das Gehäuse in dem Bereich der Austrittsöffnung der Düse eine rechteckige, quadratische, runde oder auch andere geeignete Formen annehmen. Die Eintrittsöffnung der Düse umfaßt vorteilhafterweise einen Anschlußstutzen mit einer schlitzartigen Zentrierführung. Diese Ausgestaltung ermöglicht es, die Düse austauschbar auf einem geeigneten Düsenträger aufzunehmen.

Gemäß einer weiteren vorteilhaften Ausgestaltung umfaßt die Heizdüse eine Saugvorrichtung, deren Anschlußstutzen vorzugsweise konzentrisch innerhalb des Düsenanschlußstutzens angeordnet ist. Die Saugvorrichtung erstreckt sich vom Anschlußstutzen hin zum Düsenboden und mündet hier in am Düsenboden vorgesehene Ansaugöffnungen. Der Querschnitt dieser Ansaugöffnung ist vorteilhafterweise größer als der Querschnitt des korrespondierenden Ansaugstutzens. Um die Ansaugöffnung an die jeweiligen zu entlötenden Bauelemente anzupassen, können Ansaugeinsätze hierin vorgesehen sein. Sie sind insbesondere austauschbar gestaltet und weisen eine hülsenähnliche Form auf.

Die erfindungsgemäße Heizdüse ist schließlich Bestandteil einer Löt-/Entlötvorrichtung. Diese umfaßt in herkömmlicher Weise einen als Griff ausgebildeten Düsenträger, welcher über eine entsprechende Vakuum- bzw. Heißgasleitung mit einem Steuergerät verbunden ist. Das Steuergerät dient insbesondere zur Temperaturregelung des Heißgasstromes sowie zur Schaltung und Einstellung des Vakuum- und Heißgasstromes. Die Steuerung, insbesondere der Zustrom des Heißgases sowie das Ein- und Ausschalten des Vakuums kann hierbei vorteilhafterweise durch Fußschalter erfolgen.

Insgesamt ermöglicht die erfindungsgemäße Löt-/Entlötvorrichtung einen schnelleren und schonenderen Lötvorgang als bei herkömmlichen Vorrichtungen, die allein mit Heißgasdüsen oder Heizstempeln ausgestattet waren, weil sowohl das Bauelement (durch den Düsenboden) als auch die Bauelementbeinchen (durch das Heißgas) erwärmt werden. Damit benötigt man zum Aufheizen der Lötpunkte auf Schmelztemperatur insgesamt weniger Heißgas und belastet damit auch die umliegenden Bauelemente weniger. Auch ermöglicht die vorgeschlagene Löt-/Entlötvorrichtung einen Schutz der Leiterplatte, da durch Aufsetzen des plan ausgebildeten Düsenbodens auf das Bauelement immer ein gleichmäßiger Abstand zur Leiterplatte gewährleistet wird.

Anhand der beiliegenden Zeichnungen wird die erfindungsgemäße Löt-/Entlötvorrichtung nunmehr detailliert erklärt. Hierin zeigen:
- Fig. 1: eine Draufsicht auf den Düsenboden einer Heizdüse;
- Fig. 2: eine schematische Querschnittsansicht einer erfindungsgemäßen Heizdüse, welche auf ein Bauelement aufgesetzt ist; und
- Fig. 3: eine perspektivische Ansicht des Gehäuses der erfindungsgemäßen Heizdüse.

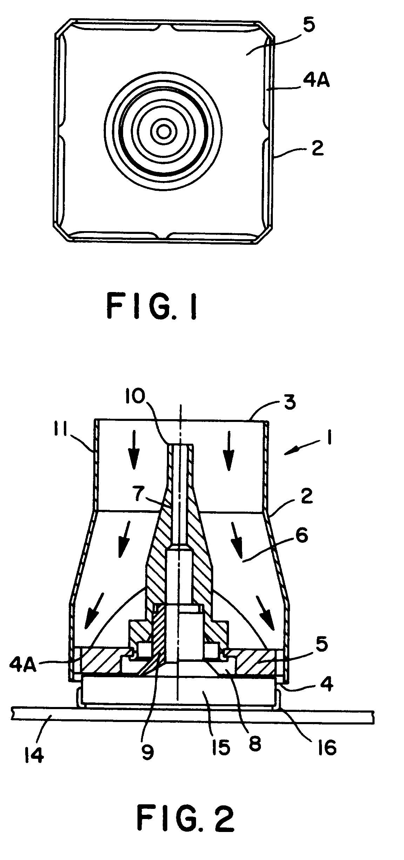

Fig. 1 zeigt eine Draufsicht auf die Kontaktfläche des Düsenbodens 5, welcher beim Betrieb der Löt-/Entlötvorrichtung auf das zu lötende/entlötende Bauteil 15 aufgesetzt wird. Zwischen dem Düsenboden 5 und dem Düsengehäuse 2 sind mehrere schlitzartige Ausnehmungen 4a vorgesehen, welche einen Durchtritt von Heißluft 6 in Richtung der Anschlußfüßchen 16 des zu erwärmenden Bauelements ermöglichen.

Fig. 2 zeigt eine schematische Querschnittsansicht der allgemein mit 1 bezeichneten Heizdüse. Erkennbar ist das Gehäuse 2, welches eine Eintrittsöffnung 3 und eine Austrittsöffnung 4 umfaßt. Im gezeigten Ausführungsbeispiel ist der Querschnitt der Austrittsöffnung 4 größer als der der Eintrittsöffnung 3. Ferner umfaßt die Düse 1 einen im Bereich der Austrittsöffnung angeordneten Düsenboden 5. Dieser wird an seiner Rückseite und seitlich durch Heißluft 6 umspült und aufgeheizt. Die Heißluft 6 entweicht durch die schlitzartigen Ausnehmungen 4a zwischen dem Düsenboden und dem Düsengehäuse 2 und gelangt gezielt in den Bereich der Anschlußfüßchen 16 des Bauelements 15.

Ferner umfaßt die erfindungsgemäße Heizdüse 1 eine Saugvorrichtung 7, welche im gezeigten Ausführungsbeispiel mittig mit dem Düsenboden 5 verbunden ist. Die Saugvorrichtung 7 mündet im Düsenboden in eine Saugöffnung 8. Zur Anpassung der Saugöffnung 8 an den jeweiligen Anwendungszweck können hierin hülsenartige austauschbare Saugeinsätze 9 vorgesehen sein.

Zum Löten/Entlöten wird die erfindungsgemäße Heizdüse entweder direkt oder mit einem geringen Abstand mit der Kontaktfläche des Düsenbodens 5 auf das Bauelement aufgesetzt. Im gezeigten Ausführungsbeispiel verbleibt zwischen dem Düsenboden 5 und dem Bauelement 15 ein schmaler Zwischenraum. Dieser wird dadurch hervorgerufen, daß der Saugeinsatz der Saugvorrichtung knapp über das Niveau des Düsenbodens 5 ragt. In diesem Fall erfolgt die Erwärmung des Bauelements nicht durch direkte Wärmeleitung vom Düsenboden zum Bauelement, sondern über die vom Düsenboden 5 ausgehende Wärmestrahlung. Das Aufheizen des Bauelements 15 sowie die zusätzliche Heißluftströmung durch die schlitzartigen Öffnungen 4a in Richtung der Anschlußfüßchen 16 bewirkt ein schnelles und gleichzeitiges Aufheizen der Lötpunkte.

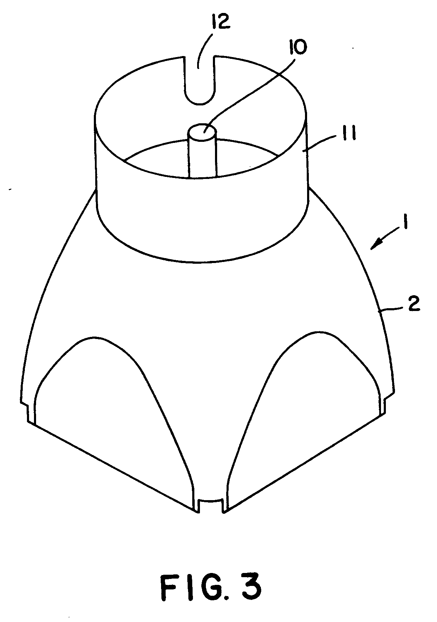

Fig. 3 zeigt in perspektivischer Ansicht die Ausgestaltung der Heizdüse 1. Das Gehäuse 2 ist insbesondere glockenförmig ausgebildet, wobei durch vier um 90° versetzte Abflachungen der Glockenwand ein insgesamt quadratischer Austrittsquerschnitt des Gehäuses gebildet ist. Das Gehäuse umfaßt ferner, wie deutlich aus Fig. 3 erkennbar ist, Ausnehmungen 13 in den Eckbereichen des Austrittsquerschnitts, die insbesondere einen Austritt der auf das Bauelement einwirkenden Heißluft ermöglichen. Um ein einfaches Austauschen der erfindungsgemäßen Heizdüse zu ermöglichen, umfaßt diese im Bereich ihres Eintrittsquerschnitts 3 einen zylindrisch ausgebildeten Anschlußstutzen 11, mittels dem die Heizdüse 1 auf einen entsprechenden Düsenträger, der insbesondere griffartig ausgebildet sein kann, aufschiebbar ist. Zu diesem Zweck kann zusätzlich eine schlitzartige Zentrierung 12 vorgesehen sein, welche sich vom oberen Rand des Anschlußstutzens 11 erstreckt. Ferner ist vorzugsweise innerhalb des Anschlußstutzens 11 ein weiterer Anschlußstutzen 10 zur Verbindung der Saugvorrichtung 7 mit einer entsprechenden Vakuumleitung versehen. Im gezeigten Ausführungsbeispiel sind die Anschlußstutzen 10 und 11 konzentrisch angeordnet, was insbesondere ein einfaches Aufstecken auf den Düsenträger ermöglicht.

Die erfindungsgemäße Heizdüse wird insbesondere in Verbindung mit einer entsprechend ausgelegten Löt-/Entlötvorrichtung betrieben, die hier im einzelnen nicht dargestellt ist.

## Patentansprüche

1. Heizdüse als Bestandteil einer Löt-/Entlötvorrichtung, insbesondere für integrierte Schaltungen, mit einem im Bereich der Düsenaustrittsöffnung angeordneten plattenartigen Düsenboden (5), auf den ein Heißgasstrom (6) trifft und der derart angeordnet ist, daß zwischen Düsenwand und Düsenboden (5) wenigstens eine schlitzartige Öffnung (4A) zum Heißgasdurchtritt gebildet ist, wobei der Düsenboden (5) zum Erwärmen eines Bauelementes (15) durch Wärmestrahlung oder Kontakterwärmung aus einem gut wärmeleitfähigen Material gebildet ist.

2. Heizdüse nach Anspruch 1, **dadurch gekennzeichnet,** daß das Düsengehäuse (2) einen im wesentlichen rechteckigen, vorzugsweise quadaratischen Austrittsquerschnitt (4) aufweist, wobei die Querschnittsfläche der Eintrittsöffnung (3) kleiner ist als die Querschnittsfläche der Austrittsöffnung (4).

3. Heizdüse nach einem der vorhergehenden Ansprüche, **dadurch gekennzeichnet,** daß die Heizdüse (1) austauschbar ausgebildet ist und im Bereich der Eintrittsöffnung (3) einen rohrartigen Anschlußstutzen (11) mit einer schlitzartig ausgebildeten, sich von der Oberkante des Anschlußstutzens (11) erstreckenden Zentrierführung (12) und einen vorzugsweise konzentrisch angeordneten Anschlußstutzen (10) einer Saugvorrichtung (7) umfaßt.

4. Heizdüse nach einem der vorhergehenden Ansprüche, **dadurch gekennzeichnet,** daß vorzugsweise im Eckbereich des Gehäuses in der Nähe des Düsenbodens (5) Aussparungen (13) zum Heißgasaustritt vorgesehen sind.

5. Heizdüse nach einem der vorangehenden Ansprüche,
**dadurch gekennzeichnet,**
daß das gut wärmeleitende Material des Düsenbodens (5) ein metallisches Material ist.

6. Heizdüse nach einem der vorhergehenden Ansprüche, dadurch gekennzeichnet, daß am Düsenboden (5) eine Saugvorrichtung (7) mit wenigstens einer sich durch den Düsenboden erstreckenden Ansaugöffnung (8) vorgesehen ist.

7. Heizdüse nach einem der vorhergehenden Ansprüche, **dadurch gekennzeichnet,** daß die Saugvorrichtung (7) mittig mit dem Düsenboden (5) in Verbindung steht, wobei sich der Querschnitt der Ansaugöffnung in Richtung des Anschlußstutzens (10) verjüngt.

8. Heizdüse nach Anspruch 6, **dadurch gekennzeichnet,** daß die Saugöffnung (8) einen austauschbaren, vorzugsweise hülsenartig ausgebildeten Saugeinsatz (9) umfaßt, dessen Oberkante vorzugsweise knapp über die Oberfläche des Düsenbodens (5) hervorsteht.

9. Heizdüse nach einem der vorhergehenden Ansprüche, **dadurch gekennzeichnet,** daß die Saugvorrichtung (7) mittig innerhalb der Düse geführt ist und vorzugsweise lösbar mit dem Düsenboden (5) verbunden ist.

10. Löt-/Entlötvorrichtung mit einer Heizdüse nach einem der vorhergehenden Ansprüche.

## Claims

1. Heating nozzle as part of a soldering/unsoldering apparatus, in particular for integrated circuits, with a plate-like nozzle bottom (5) which is arranged in the region of the nozzle outlet opening and on which impinges a hot gas stream (6) and which is arranged in such a way that between nozzle wall and nozzle bottom (5) is formed at least one slot-like opening (4A) for passage of hot gas, the nozzle bottom (5) being formed from a material which is a good conductor of heat for heating a component (15) by heat radiation or contact heating.

2. Heating nozzle according to claim 1, characterised in that the nozzle housing (2) has an essentially rectangular, preferably square outlet cross-section (4), the cross-sectional area of the inlet opening (3) being smaller than the cross-sectional area of the outlet opening (4).

3. Heating nozzle according to any of the preceding claims, characterised in that the heating nozzle (1) is of exchangeable construction and in the region of the inlet opening (3) encompasses a tube-like connection piece (11) with a slot-like centring guide (12) extending from the upper edge of the connection piece (11), and a preferably concentrically arranged connection piece (10) of a suction device (7).

4. Heating nozzle according to any of the preceding claims, characterised in that recesses (13) for hot gas exit are provided preferably in the corner region of the housing in the vicinity of the nozzle bottom (5).

5. Heating nozzle according to any of the preceding claims, characterised in that the material of the nozzle bottom (5) which is a good conductor of heat is a metallic material.

6. Heating nozzle according to any of the preceding claims, characterised in that on the nozzle bottom (5) is provided a suction device (7) with at least one suction opening (8) extending through the nozzle bottom.

7. Heating nozzle according to any of the preceding claims, characterised in that the suction device (7) is centrally connected to the nozzle bottom (5), the cross-section of the suction opening tapering in the direction of the connection piece (10).

8. Heating nozzle according to claim 6, characterised in that the suction opening (8) encompasses an exchangeable, preferably sleeve-like suction insert (9) whose upper edge preferably projects just above the surface of the nozzle bottom (5).

9. Heating nozzle according to any of the preceding claims, characterised in that the suction device (7) extends centrally within the nozzle and is preferably releasably connected to the nozzle bottom (5).

10. Soldering/unsoldering apparatus with a heating nozzle according to any of the preceding claims.

## Revendications

1. Buse de chauffage en tant que composant d'un dispositif de soudage/désoudage, notamment pour des circuits intégrés, comportant un fond de buse (5) en forme de plaque, qui est disposé au niveau de l'ouverture de sortie de la buse et que rencontre un courant de gaz chauds (6) et qui est disposé de telle sorte qu'au moins une ouverture en forme de fente (4A) pour le passage des gaz chauds est formée entre la paroi et le fond (5) de buse, le fond (5) de buse étant réalisé en un matériau bon conducteur de la chaleur de manière à chauffer un composant (15) par rayonnement thermique ou échauffement par contact.

2. Buse de chauffage selon la revendication 1, caractérisée en ce que le boîtier (2) de la buse possède une section transversale de sortie (4) essentiellement rectangulaire et de préférence carrée, la surface de la section transversale de l'ouverture d'entrée (3) étant inférieure à la surface en coupe transversale de l'ouverture de sortie (4).

3. Buse de chauffage selon l'une des revendications précédentes, caractérisée en ce que la buse de chauffage (1) est agencée de manière à pouvoir être remplacée et comprend, au niveau de l'ouverture d'entrée (3), un embout tubulaire de raccordement (11) comportant un guide de centrage (12), qui est agencé en forme de fente et s'étend à partir du bord supérieur de l'embout de raccordement (11), et un embout de raccordement (10), disposé de préférence d'une manière concentrique, d'un dispositif d'aspiration (7).

4. Buse de chauffage selon l'une des revendications précédentes, caractérisée en ce que des ouvertures pour la sortie des gaz chauds sont prévues de préférence dans la zone des coins du boîtier à proximité du fond (5) de la buse.

5. Buse de chauffage selon l'une des revendications précédentes, caractérisée en ce que le matériau bon conducteur de la chaleur du fond (5) de buse est un matériau métallique.

6. Buse de chauffage selon l'une des revendications précédentes, caractérisée en ce que sur le fond (5) de buse est prévu un dispositif d'aspiration (7) comportant au moins une ouverture d'aspiration (8) qui s'étend à travers le fond de la buse.

7. Buse de chauffage selon l'une des revendications précédentes, caractérisée en ce que le dispositif d'aspiration (7) est relié, en son centre, au fond (5) de buse, la section transversale de l'ouverture d'aspiration se rétrécissant en direction de l'embout de raccordement (10).

8. Buse de chauffage selon la revendication 6, caractérisé en ce que l'ouverture d'aspiration (8) comprend un insert interchangeable d'aspiration (9), agencé de préférence sous la forme d'une douille et dont le bord supérieur fait saillie de préférence juste au-dessus de la surface du fond (5) de la buse.

9. Buse de chauffage selon l'une des revendications précédentes, caractérisée en ce que le dispositif d'aspiration (7) est guidé d'une manière centrée à l'intérieur de la buse et est relié de préférence de façon amovible au fond (5) de la buse.

10. Dispositif de soudage/désoudage comportant une buse de chauffage selon l'une des revendications précédentes.
